(19) Europäisches Patentamt
European Patent Office
Office européen des brevets

(11) **EP 1 757 999 B1**

(12) **EUROPÄISCHE PATENTSCHRIFT**

(45) Veröffentlichungstag und Bekanntmachung des Hinweises auf die Patenterteilung:
**07.07.2010 Patentblatt 2010/27**

(51) Int Cl.:
*G05B 19/042* (2006.01)   *H04L 29/08* (2006.01)

(21) Anmeldenummer: **05018318.5**

(22) Anmeldetag: **23.08.2005**

(54) **Bereitstellung von Diensten in einem Netzwerk**

Provision of services in a network

Mise à disposition de services dans un réseau

(84) Benannte Vertragsstaaten:
**DE FR GB IT**

(43) Veröffentlichungstag der Anmeldung:
**28.02.2007 Patentblatt 2007/09**

(73) Patentinhaber: **SIEMENS AKTIENGESELLSCHAFT**
**80333 München (DE)**

(72) Erfinder:
• **Epple, Ulrich Prof.**
**35614 Asslar-Berghausen (DE)**

• **Ribeiro Simoes, Yasemin**
**52072 Aachen (DE)**

(56) Entgegenhaltungen:
DE-A1- 10 159 931   US-A1- 2001 039 581
US-A1- 2005 135 381   US-B1- 6 173 322

• **RATNASAMY S ET AL: "A SCALABLE CONTENT-ADDRESSABLE NETWORK" COMPUTER COMMUNICATION REVIEW, ACM, NEW YORK, NY, US, Bd. 31, Nr. 4, Oktober 2001 (2001-10), Seiten 161-172, XP001115754 ISSN: 0146-4833**

**Beschreibung**

Die Erfindung betrifft ein Verfahren zum Bereitstellen von Diensten in einem Peer-to-Peer Netzwerk, bei dem mindestens ein Dienst innerhalb eines Netzwerks von einer Netzwerkkomponente bereitgestellt wird und eine Dienstanforderung innerhalb des Netzwerks weitergeleitet wird. Die Erfindung betrifft weiterhin eine Netzwerkkomponente mit Mitteln zur Bereitstellung mindestens eines Dienstes innerhalb eines Peer-to-Peer Netzwerks und Mitteln zur Weiterleitung einer Dienstanforderung innerhalb des Netzwerks sowie ein Prozessleitsystem mit einer derartigen Netzwerkkomponente.

Die Erfindung kommt insbesondere in Ingenieur- und Prozessleitsystemen im Umfeld betrieblicher Netzwerke zur Anwendung.

Innerhalb eines Netzwerks kann ein angebotener Dienst bei Bedarf von einem autorisierten Client, der eine an das Netzwerk angebundene Komponente darstellt, abgerufen werden. Dies wird heute auf Grundlage moderner Bussysteme eines betrieblichen Intranets ermöglicht. Der Client muss hierzu explizit wissen, in welcher Komponente er den entsprechenden Dienst findet.

Die DE 101 59 931 A1 beschreibt ein Verfahren zum Zugriff auf Dienste eines verteilten Automatisierungssystems mit einer Mehrzahl von Automatisierungsgeräten durch eines der Automatisierungsgeräte. Dabei bilden Informationen über ein zu wartendes Automatisierungsgerät ein Selektionskriterium, anhand dessen automatisch Dienste zur Wartung des zu wartenden Automatisierungsgerätes gesucht werden. Der Zugriff erfolgt dabei innerhalb eines Netzwerkes von Automatisierungsgeräten, wobei jedes Automatisierungsgerät Kommunikationsteilnehmer innerhalb des Netzwerkes ist und wobei zwischen jeweils zwei Automatisierungsgeräten zumindest zeitweise eine so genannte Peer-to-Peer Verbindung besteht. Bei einem Netzwerk, das Peer-to-Peer Kommunikation ermöglicht, wird allen Kommunikationsteilnehmern eine Möglichkeit zum gleichberechtigten Zugriff auf das Netzwerk gegeben. Dabei kann jeder Kommunikationsteilnehmer anderen Kommunikationsteilnehmern Informationen und Dienstleistungen anbieten und seinerseits von anderen Kommunikationsteilnehmern angebotene Informationen und Dienstleistungen nutzen. Daneben wird noch die Möglichkeit geboten, Informationen und Dienstleistungen auf anderen Kommunikationsteilnehmern zu suchen und zu lokalisieren und anschließend auf diese Funktionen oder Dienstleistungen zuzugreifen.

Ein Verfahren sowie eine Netzwerkkomponente der eingangs genannten Art sind aus dem Dokument "A Scalable Content-Addressable Network", S. Ratnasamy et al, Computer Communication Review, ACM, Bd. 1, Nr. 4, October 2001 (2001-10), S. 161-172 bekannt.

Ferner ist aus der veröffentlichten Patentanmeldung US 2001/0039581 A1 ein Verfahren zur Lastverteilung von Anfragen auf mehrere Server eines Client-Server-Systems bekannt.

Der Erfindung liegt die Aufgabe zu Grunde, die Bereitstellung von Diensten innerhalb eines Netzwerks zu vereinfachen.

Diese Aufgabe wird durch eine Netzwerkkomponente gelöst mit

- Mitteln zur Bereitstellung mindestens eines Dienstes innerhalb eines Peer-to-Peer Netzwerks,
- Mitteln zur Abbildung des Dienstes abhängig von skalierbaren Leistungsmerkmalen des Dienstes auf erste Raumkoordinaten eines ersten Knotens in einem virtuellen Merkmalsraum,
- Mitteln zur Erfassung von zweiten Raumkoordinaten eines zweiten Knotens, wobei die zweiten Raumkoordinaten Leistungsmerkmale einer innerhalb des Netzwerks gestellten Dienstanforderung kennzeichnen,
- Speichermitteln zum Speichern einer Nachbarschaftsliste mit Lageinformationen über mindestens einen dritten Knoten mit dritten Raumkoordinaten, wobei der dritte Knoten einen weiteren Dienst kennzeichnet, der von einer ersten weiteren Netzwerkkomponente des Netzwerks bereitgestellt wird und
- Mitteln zur Weiterleitung der Dienstanforderung innerhalb des Netzwerks in Abhängigkeit der ersten und zweiten Raumkoordinaten und der Lageinformationen.

Weiterhin wird die Aufgabe durch ein Verfahren zur Bereitstellung von Diensten in einem Peer-to-Peer Netzwerk gelöst, bei dem

- mindestens ein Dienst innerhalb eines Netzwerks von einer Netzwerkkomponente bereitgestellt wird,
- der Dienst abhängig von skalierbaren Leistungsmerkmalen des Dienstes auf erste Raumkoordinaten eines ersten Knotens in einem virtuellen Merkmalsraum abgebildet wird,
- zweite Raumkoordinaten eines zweiten Knotens erfasst werden, wobei die zweiten Raumkoordinaten Leistungsmerkmale einer innerhalb des Netzwerks gestellten Dienstanforderung kennzeichnen,
- eine Nachbarschaftsliste mit Lageinformationen über mindestens einen dritten Knoten mit dritten Raumkoordinaten innerhalb der Netzwerkkomponente gespeichert wird, wobei der dritte Knoten einen weiteren Dienst kennzeichnet, der von einer ersten weiteren Netzwerkkomponente des Netzwerks bereitgestellt wird und
- die Dienstanforderung innerhalb des Netzwerks in Abhängigkeit der ersten und zweiten Raumkoordinaten und der Lageinformationen weitergeleitet wird.

Der Erfindung liegt die Erkenntnis zugrunde, dass Dienste, die innerhalb eines Netzwerks von einer Netzwerkkomponente angeboten werden, durch charakteristische skalierbare Leistungs- bzw. Qualitätsgrößen beschrieben werden können. Beispielsweise lässt sich ein von einer Netzwerkkomponente angebotener Archivierungsdienst über Angaben des Archivierungszyklus und einer archivierbaren Datenmenge sowohl qualitativ als auch quantitativ spezifizieren. Erfindungsgemäß werden die skalierbaren Leistungsmerkmale des Dienstes auf die ersten Raumkoordinaten des ersten Knotens in dem virtuellen Merkmalsraum abgebildet. Jedem Dienst ist somit ein Knoten zugeordnet und jedem Leistungsmerkmal des Dienstes eine Raumkoordinate des entsprechenden Knotens. Mit anderen Worten wird ein Dienst, der sich durch mehrere skalierbare Leistungsmerkmale auszeichnet, auf einen Vektor innerhalb des virtuellen Merkmalraums abgebildet, dessen Komponenten die einzelnen Leistungsmerkmale des Dienstes wiedergeben. Der Vektor entspricht einer Darstellungsform des Knotens.

Auf analoge Weise lässt sich auch eine innerhalb des Netzwerks gestellte Dienstanforderung auf einen Knoten bzw. Vektor des virtuellen Merkmalsraums abbilden. Voraussetzung ist lediglich, dass sich auch die Dienstanforderung in Form skalierbarer Leistungsmerkmale beschreiben lässt. Der dieser Dienstanforderung zugeordnete zweite Knoten lässt sich von der Netzwerkkomponente erfassen. Auf diese Art und Weise ist die Netzwerkkomponente z. B. in der Lage, den Abstand zwischen dem ersten Knoten und dem zweiten Knoten zu ermitteln. Dieser Abstand ist ein charakteristisches Merkmal dafür, inwiefern die Dienstanforderung durch die Netzwerkkomponente erfüllt werden kann. Je näher der erste Knoten und der zweite Knoten innerhalb des virtuellen Merkmalsraumes beieinander liegen, desto besser kann die Netzwerkkomponente die gestellte Dienstanforderung erfüllen.

Die Netzwerkkomponente weist darüber hinaus Speichermittel zum Speichern der Nachbarschaftsliste auf. Innerhalb der Nachbarschaftsliste sind Informationen über weitere im Netz vorhandene Netzwerkkomponenten abgelegt. Diese Informationen sind in Form einer Lagebeschreibung weiterer Knoten abgelegt, wobei jeder Knoten die Leistungsmerkmale einer entsprechenden Netzwerkkomponente kennzeichnet. So enthält die Nachbarschaftsliste Informationen über den dritten Knoten, der dritte Raumkoordinaten aufweist, wobei jede dieser Raumkoordinaten ein skalierbares Leistungsmerkmal der weiteren Netzwerkkomponente kennzeichnet.

Anhand der Nachbarschaftsliste, der zweiten Raumkoordinaten bzw. des zweiten Knotens, durch den die Dienstanforderung innerhalb des virtuellen Merkmalsraumes gekennzeichnet ist, und anhand des ersten Knotens, der die skalierbaren Leistungsmerkmale des Dienstes der Netzwerkkomponente kennzeichnet, kann die Netzwerkkomponente entscheiden, ob eine Weiterleitung der gestellten Dienstanforderung an die erste weitere Netzwerkkomponente sinnvoll ist. Beispielsweise wird die erste Netzwerkkomponente hierzu den Abstand zwischen dem ersten Knoten und dem zweiten Knoten innerhalb des virtuellen Merkmalsraumes auswerten und mit dem Abstand zwischen dem zweiten Knoten und dem dritten Knoten vergleichen. Ist der Abstand zwischen dem zweiten Knoten und dem dritten Knoten kleiner als der Abstand zwischen dem ersten und dem zweiten Knoten, so wird die Netzwerkkomponente die Dienstanforderung innerhalb des Netzwerks an die erste weitere Netzwerkkomponente weiterleiten.

Um sämtliche Leistungsmerkmale, die innerhalb des Netzwerks von den an das Netzwerk angeschlossenen Netzwerkkomponenten bereitgestellt werden, auf den virtuellen Merkmalsraum abbilden zu können, wird zweckmäßiger Weise für jedes Leistungsmerkmal eine Dimension innerhalb des Merkmalsraumes vorgesehen. Das bedeutet, dass in einer vorteilhaften Ausführungsform der Erfindung der Merkmalsraum mindestens n Dimensionen aufweist, wobei n der Summe der skalierbaren Leistungsmerkmale der innerhalb des Netzwerks verfügbaren Dienste entspricht.

Bei einer vorteilhaften Ausführungsform der Erfindung weist die Netzwerkkomponente Mittel zur Bestimmung eines den ersten Knoten einschließenden ersten Teilraums innerhalb des Merkmalsraumes auf. Der erste Teilraum ist somit eine Untermenge des insbesondere eindimensionalen Merkmalsraumes. Er beinhaltet den ersten Knoten und somit stellvertretend den Dienst, der durch den ersten Knoten auf der Raumebene repräsentiert wird. Vorteilhafter Weise enthält dieser erste Teilraum lediglich den ersten Knoten. Er enthält nur dann einen weiteren Knoten, wenn sämtliche Leistungsmerkmale des weiteren Knotens mit denen des ersten Knotens identisch sind.

Zweckmäßigerweise kennzeichnen die Lageinformationen einen den dritten Knoten einschließenden zweiten Teilraum. Auf diese Art und Weise wird jedem Dienst der von einer Netzwerkkomponente des Netzwerks erbracht wird, ein Knoten innerhalb des eindimensionalen Merkmalsraums zugeordnet, der wiederum von einem Teilraum umschlossen wird. Durch die hierdurch entstehende Raumaufteilung werden die Knoten innerhalb des Merkmalsraums eindeutig voneinander abgegrenzt. Hierdurch entstehen eindeutige Nachbarschaftsverhältnisse zwischen den jeweiligen Knoten innerhalb des Merkmalsraums, die eine Nachbarschaft hinsichtlich ihrer Leistungsmerkmale kennzeichnen.

Vorteilhafter Weise beschreiben die Lageinformationen, die mit Hilfe der Speichermittel der Netzwerkkomponente gespeichert werden, einen Teilraum, der zu dem ersten Teilraum benachbart ist. Bei einem n-dimensionalen Merkmalsraum bedeutet dies, dass die Koordinationenintervalle des ersten Teilraums und des zweiten Teilraums in n-1 Dimensionen überlappen und in einer Dimension aneinandergrenzen. Durch das Abspeichern des zweiten Teilraums innerhalb der Nachbarschaftsliste entsteht der Vorteil, dass die erste Netzwerkkomponente ihren direkten Nachbarn kennt. Ebenso kennt jede weitere im Netzwerk installierte Netzwerkkomponente, deren Ausführung der der ersten Netzwerkkomponente entspricht, ihren direkten Nachbarn. Auf diese Art und Weise kann eine Suche nach einer Netzwerkkomponente, die einen angeforderten Dienst erfüllen kann, sehr einfach an einer beliebigen Netzwerkkomponente gestartet werden und so innerhalb einer Nachbarschaft von Knoten zu Knoten weitergeleitet werden. Das Modell unterstützt somit die lokale Suche unter Nachbarschaftsknoten.

Bei einer vorteilhaften Ausführungsform der Erfindung sind die Speichermittel zum Speichern von weiteren Lageinformationen eines dritten Teilraumes vorgesehen, wobei die Koordinatenintervalle des dritten Teilraumes und des zweiten Teilraumes in n-1 Dimensionen überlappen und in einer Dimension aneinandergrenzen. Dies bedeutet, dass innerhalb der Nachbarschaftsliste der Netzwerkkomponente nicht nur die Koordinatenintervalle des direkt benachbarten Teilraums abgespeichert sind, sondern ebenso die Koordinatenintervalle des Nachbarn des direkten Nachbars abgelegt sind. Auf diese Art und Weise kann eine noch effizientere Suche nach einem geeigneten Knoten erfolgen, der einer gestellten Dienstanforderung gerecht wird.

Um eine Aussage darüber treffen zu können, welcher Knoten innerhalb des Netzwerkes am ehesten geeignet ist, einer Dienstanforderung zu entsprechen, ist es zweckmäßig, wenn die Netzwerkkomponente Mittel zur Bestimmung des Teilraums umfasst, der den geringsten Abstand zum zweiten Knoten aufweist. Bei der Abstandsmessung kann beispielsweise der Schwerpunkt eines Teilraums bestimmt werden und ausgehend von diesem Schwerpunkt der Abstand zum zweiten Knoten ermittelt werden, wobei der zweite Knoten die Leistungsmerkmale der Dienstanforderung repräsentiert. Über die Auswertung des Abstandes ist die Netzwerkkomponente in der Lage, eine erste Aussage darüber zu treffen, welcher Knoten innerhalb des virtuellen Merkmalsraumes den Anforderungen der Dienstanforderung am ehesten gerecht wird, und somit welcher Knoten bzw. welche Netzwerkkomponente den angeforderten Dienst übernehmen sollte.

Im Allgemeinen besteht eine Dienstanforderung aus mehreren geforderten Leistungsmerkmalen, wobei die einzelnen Leistungsmerkmale unterschiedlich gewichtet sind und unterschiedliche Toleranzbereiche zulassen. Zweckmäßigerweise weist die Netzwerkkomponente Mittel zur Erfassung von Gewichtsfaktoren und/oder Toleranzintervallen auf, wobei jeweils ein Gewichtungsfaktor und/oder jeweils ein Toleranzintervall einer der zweiten Raumkoordinaten des zweiten Knotens zugeordnet sind. Hierdurch wird es möglich, auch dann den geeigneten Knoten für eine Dienstanforderung zu bestimmen, wenn keiner der Knoten innerhalb des virtuellen Merkmalsraumes den Leistungsmerkmalen der Dienstanforderungen exakt entspricht. Insbesondere in diesem Zusammenhang ist es daher vorteilhaft, wenn die Mittel zur Weiterleitung der Dienstanforderung derart ausgeführt sind, dass die Weiterleitung unter Berücksichtigung der Gewichtsfaktoren und/oder Toleranzintervalle geschieht.

Wenn eine neue Netzwerkkomponente in das Netzwerk integriert werden soll, wird dieser zweckmäßiger Weise ein eigener Teilraum des Merkmalsraumes zugewiesen. Bei einer vorteilhaften Ausführungsform der Erfindung weist die Netzwerkkomponente Mittel zur Erfassung von vierten Raumkoordinaten eines vierten Knotens auf, wobei die vierten Raumkoordinaten skalierbare Leistungsmerkmale einer zweiten weiteren Netzwerkkomponente kennzeichnen. Wird also die zweite weitere Netzwerkkomponente, bei der es sich beispielsweise um einen neuen Peer eines Peer-to-Peer Netzwerkes handelt, in das Netzwerk integriert, so ist die Netzwerkkomponente in der Lage, mit den Mitteln zur Erfassung der vierten Raumkoordinaten den vierten Knoten zu erfassen, wobei der vierte Knoten die skalierbaren Leistungsmerkmale eben dieses neuen in das Netz integrierten Peers repräsentiert.

Um die Integration einer neuen Netzwerkkomponente in das Netzwerk zu ermöglichen und eine entsprechende dynamische Anpassung des virtuellen Merkmalsraumes zu gewährleisten, ist es vorteilhaft, wenn die erste Netzwerkkomponente Mittel aufweist zur dynamischen Aufteilung des ersten Teilraums in einen ersten und einen zweiten Subteilraum derart, dass der erste Subteilraum den ersten Knoten und der zweite Subteilraum den vierten Knoten umschließt. Beispielsweise könnte das Verfahren folgendermaßen ablaufen. Die Netzwerkkomponente erfasst die Raumkoordinaten des vierten Knotens, der der zweiten weiteren Netzwerkkomponente zugeordnet ist, und stellt hierbei fest, dass die vierten Raumkoordinaten in dem der Netzwerkkomponente zugeordneten ersten Teilraum liegen. Ist dies der Fall, so teilt die Netzwerkkomponente ihren ersten Teilraum in einen ersten und einen zweiten Subteilraum auf, weist dem ersten Subteilraum den ersten Knoten zu und dem zweiten Subteilraum den vierten Knoten, der repräsentativ für die Leistungsmerkmale eines Dienstes der zweiten weiteren Netzwerkkomponente steht.

Der virtuelle Merkmalsraum lässt sich bei einer Veränderung der Netzwerkkonfiguration sehr leicht dynamisch adaptieren, wenn die Netzwerkkomponente Mittel zur Generierung jeweils einer Identifikationsnummer für den ersten und zweiten Subteilraum aufweist, wobei die jeweilige Identifikationsnummer sowohl den zugehörigen Subteilraum als auch den ersten Teilraum kennzeichnet. Durch eine derartige Identifikationsnummer lässt sich im Nachhinein noch die Entstehungsgeschichte des Subteilraums nachvollziehen. Wird beispielsweise später die zweite weitere Netzwerkkomponente, deren Dienst der vierte Knoten zugewiesen ist, vom Netzwerk getrennt, so muss der zugehörige zweite Subteilraum von einem anderen Knoten verwaltet werden. Da die Identifikationsnummer des ersten Subteilraumes nach wie vor Rückschlüsse auf den ersten Teilraum, aus dem der erste Subteilraum entstanden ist, zulässt, kann nun auf diese einfache Art und Weise aus dem ersten Subteilraum wieder rückwirkend der erste Teilraum reproduziert werden.

Insbesondere bei der oben beschriebenen Situation eines Ausfalls einer Netzwerkkomponente, ist es daher vorteilhaft, wenn die Netzwerkkomponente Mittel zur Verschmelzung des ersten und zweiten Teilraumes bei Ausfall der ersten weiteren Netzwerkkomponente aufweist. Bei Ausfall der ersten weiteren Netzwerkkomponente wird der zweite Teilraum, der wie hier angenommen, dem ersten Teilraum benachbart ist, von der Netzwerkkomponente mit verwaltet.

In heutigen Prozessleit- und Automatisierungssystemen besteht häufig der Wunsch, für einen angeforderten Dienst eine geeignete Netzwerkkomponente aufzufinden. Insbesondere für solche Anwendungen ist es daher vorteilhaft, wenn die Netzwerkkomponente in ein Prozessleitsystem integrierbar ist. In heutigen modernen Bussystemen des betrieblichen Intranets muss ein Client explizit wissen, in welcher Komponente er einen angeforderten Dienst findet. Bei einen Prozessleitsystem, in dem Ausführungsformen der erfindungsgemäßen Netzwerkkomponente integriert sind, besteht nicht mehr das Erfordernis, dass jeder Client den Einbauort aller Dienste, die während der Laufzeit ausführbar sind, in einer Konfigurationsphase vorab explizit mitgeteilt bekommt. Im Gegensatz zu bekannten Prozessleitsystemen, bei denen ein zentraler Engineering-Server installiert ist, ist es nicht mehr notwendig, dass ein Betriebsleiter oder Systemtechniker, der einen bestimmten Dienst ausführen möchte, erst diesen zentralen Server kontaktiert, um den Aufenthaltsort der Netzwerkkomponente in Erfahrung zu bringen, die einen angeforderten Dienst übernehmen kann. Wenn die Konfiguration des Prozessleitsystems verändert wird oder eine Komponente des Prozessleitsystems ausfällt, entfällt bei einer Verwendung von Netzwerkkomponenten gemäß einer Ausführung der Erfindung das aufwendige Ändern der Konfigurationsdateien, in denen heutzutage die Einbauorte sämtlicher Dienst hinterlegt sind.

Im Folgenden wird die Erfindung anhand der in den Figuren dargestellten Ausführungsbeispiele näher beschrieben und erläutert. Es zeigen:

FIG 1      ein Ebenenmodell eines Peer-to-Peer Netzwerks zur Bereitstellung von Diensten,
FIG 2      eine Abbildung von Diensten auf Knoten in einem zweidimensionalen virtuellen Merkmalsraum,
FIG 3      eine Zuordnung von Teilräumen zu den Knoten des virtuellen Merkmalsraumes,
FIG 4      eine Suche nach einem geeigneten Dienstanbieter innerhalb des virtuellen Merkmalsraumes,
FIG 5      eine Anfrage eines neuen Dienstes auf Integration in einen virtuellen Merkmalsraum,
FIG 6      eine Integration des neuen Dienstes in den virtuellen Merkmalsraum durch Teilung eines ersten Teilraumes,
FIG 7      die Anwendung eines Raumnummerierungsverfahrens bei einer Integration neuer Dienste
FIG 8      einen ersten Schritt bei der Bearbeitung einer Dienstsuchanfrage,
FIG 9      einen zweiten Schritt bei der der Bearbeitung der Dienstsuchanfrage,
FIG 10     einen dritten Schritt bei der Bearbeitung der Dienstsuchanfrage,
FIG 11     einen vierten Schritt bei der Bearbeitung der Dienstsuchanfrage,
FIG 12     ein erstes Ausfallszenario in einem virtuellen Merkmalsraum,
FIG 13     ein zweites Ausfallszenario in einem virtuellen Merkmalsraum und
FIG 14     ein drittes Ausfallszenario in einem virtuellen Merkmalsraum.

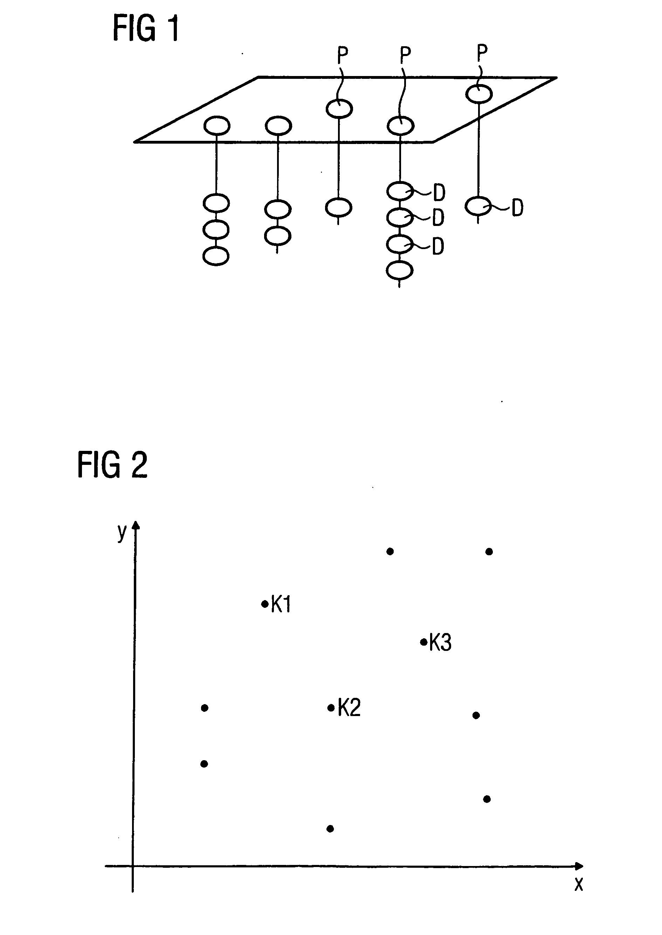

FIG 1 zeigt ein Ebenenmodell eines Peer-to-Peer Netzwerkes zur Bereitstellung von Diensten. Unter einem Peer-to-Peer Netzwerk wird ein aus verschiedenen Rechnern (Peers) P bestehendes Netz verstanden, in dem alle Rechner P gleichberechtigt sind und sowohl Dienste D in Anspruch nehmen als auch Dienste D zur Verfügung stellen können. Die Rechner P können als Arbeitsstation genutzt werden, aber auch Aufgaben im Netz anbieten.

Im Gegensatz zu dem aus der Informationstechnik bekannten Client Server Prinzip existiert in einem Peer-to-Peer Netzwerk keine Rollenverteilung. Jede intelligente Netzwerkkomponente ist ein Peer P des Netzwerks und kann somit gleichzeitig Client als auch Server sein. Wie in FIG 1 zu erkennen ist, kann jede hier als Rechner P ausgeführte Netzwerkkomponente innerhalb des Netzes ein oder mehrere Dienste D anbieten. Jeder Dienst D kann durch seine spezifischen skalierbaren Leistungsmerkmale beschrieben werden und somit in Form eines Punktes in einem virtuellen Merkmalsraum dargestellt werden. Eine derartige Abbildung ist in FIG 2 dargestellt.

FIG 2 zeigt eine Abbildung von Diensten auf Knoten K1,K2,K3 in einem zweidimensionalen virtuellen Merkmalsraum. Jeder Dienst, der durch eine in dem Netzwerk integrierte Netzwerkkomponente erbracht werden kann, lässt sich durch spezifische, insbesondere skalierbare Leistungsmerkmale beschreiben. Das Verfahren betrachtet eine Gruppe von Diensten gleichen Typs (Archivierungsdienstgruppe, Meldedienstgruppe...etc), die beliebig verteilt auf verschiedenen Rechnern in einem Netzwerk verwaltet werden. Unabhängig von dieser Verteilung teilen sich die Dienste gleichen Typs nach ihren Diensteigenschaften bzw. Leistungsmerkmalen einen gemeinsamen n-dimensionalen Merkmalsraum. Jedem dieser skalierbaren Leistungsmerkmale ist eine Koordinate innerhalb des virtuellen Merkmalsraumes zugeordnet. Bei dem in FIG 2 dargestellten einfachen Beispiel lassen sich die im Netz angebotenen Dienste eines bestimmten Typs anhand zweier Leistungsmerkmale beschreiben, von denen das erste Leistungsmerkmal auf eine Koordinate x abgebildet wird und das zweite Leistungsmerkmal auf eine Koordinate y. Auf diese Art und Weise wird ein erster Dienst auf einen ersten Knoten K1 abgebildet und ein zweiter Dienst entsprechend seiner Leistungsmerkmale auf einen Knoten K3 in der zweidimensionalen Ebene, die durch den virtuellen Merkmalsraum aufgespannt wird. Innerhalb des zweidimensionalen Merkmalsraums lassen sich sowohl Dienste darstellen, die von den in dem Netzwerk angebundenen Komponenten erbracht werden können, als auch Dienstanforderung, die an das Netzwerk gestellt werden. Beispielsweise könnte ein zweiter Knoten K2 eine Dienstanforderung abbilden, die an das Netzwerk gestellt wird. x und y Koordinate des zweiten Knotens K2 repräsentieren somit die geforderten Leistungsmerkmale, die von einer beliebigen Komponente des Peer-to-Peer Netzwerks erbracht werden sollen. Somit lässt sich anhand der zweidimensionalen Darstellung in FIG 2 erkennen, dass der Abstand eines Knotens zu dem zweiten Knoten K2 Aufschluss darüber gibt, inwiefern der jeweilige Knoten bzw. die durch ihn repräsentierte Netzwerkkomponente in der Lage ist, der Dienstanforderung zu genügen. Je kleiner der Abstand zwischen dem potenziellen "dienstleistenden" Knoten und dem zweiten Knoten K2 ist, desto eher entsprechen dessen Leistungsmerkmale den Leistungsmerkmalen, die von der Dienstanforderung gefordert werden.

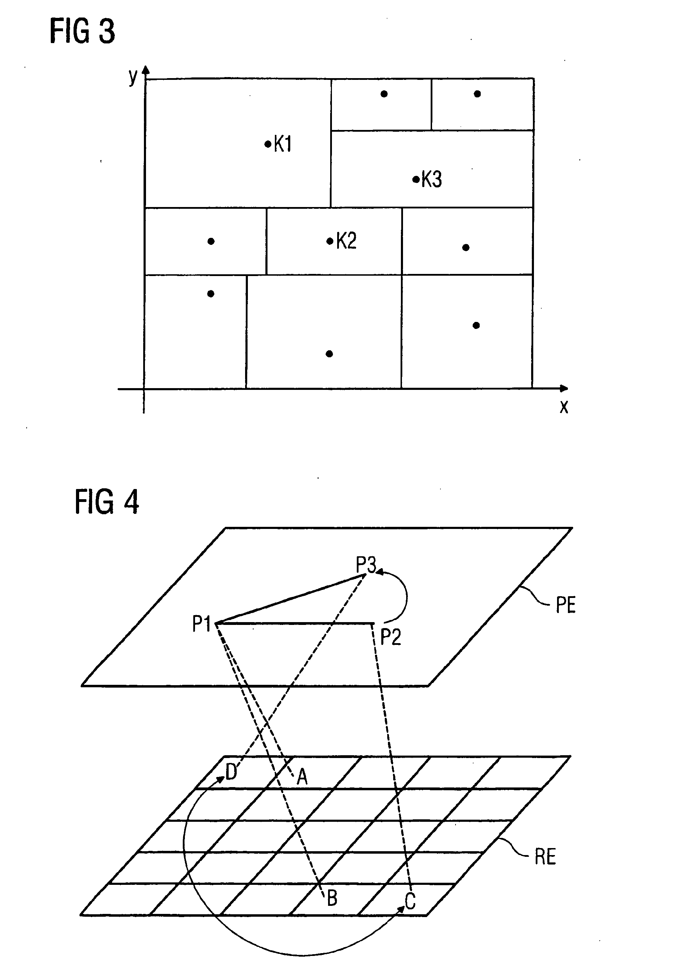

FIG 3 zeigt eine Zuordnung von Teilräumen TR1,TR2 zu den Knoten K1,K3 des virtuellen Merkmalsraums, hier beispielhaft für den ersten Knoten K1 und den dritten Knoten K3. Der dargestellte Merkmalsraum entspricht dem bereits in FIG 2 gezeigten zweidimensionalen virtuellen Merkmalsraum. Der Merkmalsraum wird unter allen im System befindlichen Diensten gleichen Typs derart aufgeteilt, dass jeder Dienst seinen eigenen disjunkten Raum, also seinen Teilraum TR1,TR2 besitzt. Durch diese Art der Raumaufteilung werden sämtliche Knoten des virtuellen Merkmalsraums scharf voneinander abgegrenzt. Damit sind Nachbarschaften der jeweiligen Knoten auf der Raumebene eindeutig definiert. Dadurch, dass jeder Knoten im Netzwerk einen eindeutigen Teilraum besitzt, kann für jeden Knoten eine Nachbarschaftsliste angelegt werden, in dem die direkten Nachbarn des jeweiligen Knotens abgelegt sind. Auf diese Art und Weise lässt sich ein Knoten, der einen bestimmten Dienst ausführen soll, sehr einfach innerhalb dieser Nachbarschaftsverhältnisse suchen. Das Modell unterstützt somit die lokale Suche unter Nachbarknoten.

Der gesamte vom Koordinatensystem aufgespannte Merkmalsraum ist zu jedem Zeitpunkt dynamisch aufgeteilt unter allen Knoten im System. Die Aufteilung geschieht derart, dass jeder Knoten seinen eigenen disjunkten Teilraum zugewiesen bekommt. Jeder Teilraum stellt in diesem n-dimensionalen Merkmalsraum ein lebendes Objekt dar, das über Peers bzw. Netzwerkkomponenten mit anderen Teilräumen des gleichen Merkmalsraumes kommunizieren kann. Jeder Peer wiederum, der Mitglied des Suchnetzwerkes ist, verwaltet eine Teilmenge der Dienste, die wiederum im aufgespannten Raum mit anderen Diensten benachbart sein können, die anderen Peers zugewiesen sind.

FIG 4 zeigt eine Suche nach einem geeigneten Dienstanbieter innerhalb des virtuellen Merkmalsraumes. Der virtuelle Merkmalsraum ist in FIG 4 in Form einer Raumebene RE repräsentiert, die in Teilräume aufgeteilt ist, wobei jeder Teilraum bzw. der darin enthaltene hier nicht dargestellte Knoten einen Dienst A,B,C,D repräsentiert. In einer Peerebene PE sind die Peers bzw. Netzwerkkomponenten P1, P2, P3 dargestellt, die die in der Raumebene repräsentierten Dienste A,B,C,D erbringen. In einer generischen Ebene ist ein erster Peer P1, mit einem zweiten Peer P2 und einem dritten Peer P3 verbunden. Der erste Peer P1 bietet einen ersten Dienst A und einen zweiten Dienst B innerhalb des Netzwerkes an, der zweite Peer P2 den Dienst C und der dritte Peer P3 den Dienst D. Es sei nun angenommen, dass aus dem zweiten Peer P2 eine Suchanfrage gestartet wird. Es sei weiter angenommen, dass die Koordinaten der Suchanfrage innerhalb des Teilraums liegen, der den Dienst D repräsentiert. Der zweite Peer P2, der den Dienst C verwaltet, berechnet den Abstand zwischen seinen Nachbarraumobjekten, in diesem Fall dem Dienst B und der Suchanfrage und leitet die Suchanfrage entsprechend an den ersten Peer P1 weiter, der den Dienst B verwaltet. Der erste Peer P1 verwaltet neben dem Dienst B auch den Dienst A, der direkt an die Suchanfrage D angrenzt. Der erste Peer P1 berechnet nun den Abstand zwischen der Suchanfrage und seinen Nachbarraumobjekten und stellt dabei fest, dass der Teilraum, in dem sich die Suchanfrage D befindet, von den Peer P3 verwaltet wird. Entsprechend leitet der erste Peer P1 die Suchanfrage an den dritten Peer P3 weiter. Durch diese Art der Raumverteilung ist zwischen den Diensten C und D ein Shortcut entstanden. D.h., obwohl auf der Raumebene RE der Dienst C weit von dem Dienst D entfernt ist, kann über die Räume, in denen die Dienste A und B enthalten sind, eine schnelle Suchverbindung entstehen.

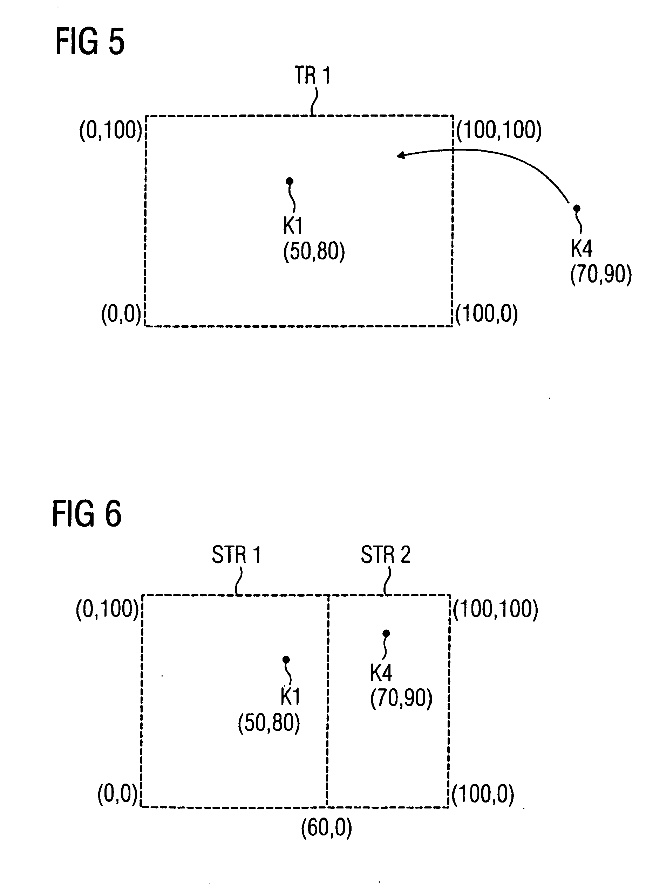

FIG 5 zeigt eine Anfrage eines neuen Dienstes auf Integration in einen virtuellen Merkmalsraum. Es sei angenommen, dass einem ersten Dienst ein erster Knoten K1 innerhalb des virtuellen Merkmalsraums zugeordnet ist, wobei der erste Knoten K1 von einem ersten Teilraum TR1 umgeben ist. Der erste Knoten K1 hat innerhalb des Merkmalsraumes die Koordinaten (50,80). Die Grenzen des ersten Teilraumes TR1 erstrecken sich von der linken unteren Ecke, gekennzeichnet durch die Koordinaten (0,0), bis zur rechten oberen Ecke (100,100). In dem vereinfachten Beispiel sei angenommen, dass der virtuelle Merkmalsraum nur zwei Dimensionen aufweist.

Das Szenario geht von der Annahme aus, dass eine neue Netzwerkkomponente, die in der Lage ist, einen Dienst zu erbringen, in das Netzwerk integriert wird. Der Dienst dieser neuen Netzwerkkomponente lässt sich durch einen Knoten K4 beschreiben, der innerhalb des virtuellen Merkmalsraumes die Koordinaten (70,90) besitzt. Die Koordinaten (70,90) befinden sich innerhalb des ersten Teilraumes TR1.

Jeder Teilraum innerhalb des n-dimensionalen Merkmalsraumes umfasst in der Regel nur einen Knoten. Lediglich wenn zwei Knoten durch exakt dieselben Koordinaten innerhalb des Merkmalsraumes charakterisiert sind, kann der Fall eintreten, dass innerhalb eines Teilraumes zwei Knoten vorhanden sind. Da sich hier jedoch die Koordinaten des Knotens K1 und des Knotens K4 unterscheiden, muss der erste Teilraum TR1 zur Integration des Knotens K4 in einen ersten Subteilraum und einen zweiten Subteilraum unterteilt werden. Ziel des Raumaufteilungsverfahrens ist es, die den Merkmalsraum zugeordneten Dienste so günstig wie möglich im Raum anzuordnen, um anschließend auf dieser so gewonnenen Ordnungsstruktur eine Suche nach den Diensten zu ermöglichen. Dies geschieht, in dem der hier dargestellte zweidimensionale Merkmalsraum durch Dienste nach einer bestimmten Raumaufteilungsregel aufgeteilt wird. Die Raumaufteilung erfolgt in dem Merkmalsraum für jeden Raum zyklisch über beide Dimensionen.

FIG 6 zeigt eine Integration des neuen Dienstes in den virtuellen Merkmalsraum durch Teilung des ersten Teilraumes. Der erste Teilraum TR1 mit den ursprünglichen Koordinatengrenzen (0,0) - (100,100) ist nun aufgeteilt worden in einen ersten Subteilraum STR1 mit den Koordinatengrenzen (0,0) - (60,100), wobei der erste Subteilraum den Knoten K1 mit den Koordinaten (50,80) enthält. Dem neuen Knoten K4 ist ein zweiter Subteilraum STR2 zugeordnet worden, der sich durch die verbliebene Fläche innerhalb des ursprünglichen Teilraumes TR1 kennzeichnet. Seine Koordinatengrenzen erstrecken sich somit von dem unteren Grenzpunkt (60,0) bis zum oberen Grenzpunkt (100,100).

Im Folgenden wird eine allgemeine Formulierung der verwendeten Raumaufteilungsregeln angegeben. Jeder Raum hat maximal einen Dienst bzw. einen Knoten, der diesen Dienst kennzeichnet. Eine Ausnahme tritt nur dann ein, wenn sich innerhalb des Merkmalsraumes Dienste mit identischen Leistungsmerkmalen befinden. In einem solchen Fall kann ein Raum bzw. ein Teilraum mehrere Dienste mit identischen Merkmalseigenschaften besitzen. Diese Dienste befinden sich bei einem Suchvorgang durch ihre dynamischen Merkmale, wie Prozessorauslastung, Speicherzugriff ... etc., unterscheiden. Es ergeben sich hierbei folgende Raumaufteilungsregeln:

Grenzwerte eines Raumes seien:

$$\left(x_{1,raum,min}, x_{2,raum,min}, \ldots, x_{n,raum,min}\right) \text{ und } \left(x_{1,raum,max}, x_{2,raum,max}, \ldots, x_{n,raum,max}\right)$$

$$x_{neu} = \frac{\left(x_{1,serviceobjektA} + x_{2,serviceobjektB}\right)}{2}$$

Aufteilung nach der 1. Dimension:

$$x_{neu,raum,min} = \begin{cases} x_{raum,min}, x_{1,service} < x_{neu} \\ x_{neu}, x_{1,service} > x_{neu} \\ 2.dim, x_{1,service} = x_{neu} \end{cases} \quad \wedge \quad x_{neu,raum,max} = \begin{cases} x_{neu}, x_{1,service} < x_{neu} \\ x_{raum,max}, x_{1,service} > x_{neu} \\ 2.dim, x_{1,service} = x_{neu} \end{cases}$$

$$\vdots \qquad \vdots \qquad \vdots$$

Aufteilung nach der n'ten Dimension:

$$x_{neu,raum,min} = \begin{cases} x_{raum,min}, x_{n,service} < x_{neu} \\ x_{neu}, x_{n,service} > x_{neu} \\ (n-1).dim, x_{n,service} = x_{neu} \end{cases} \quad \wedge \quad x_{neu,raum,max} = \begin{cases} x_{neu}, x_{n,service} < x_{neu} \\ x_{raum,max}, x_{n,service} > x_{neu} \\ 2.dim, x_{n,service} = x_{neu} \end{cases}$$

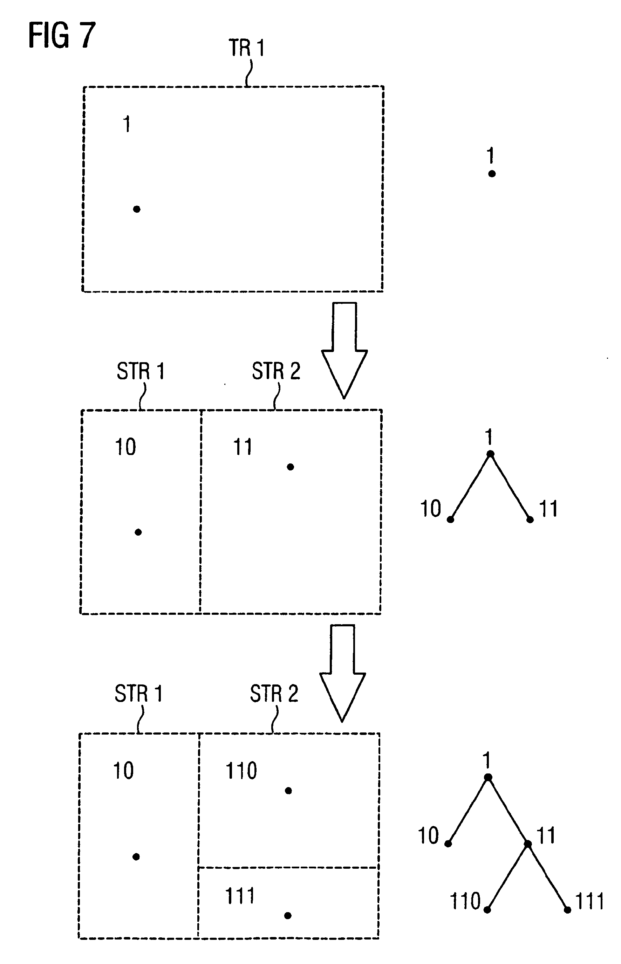

FIG 7 zeigt die Anwendung eines Raumnummerierungsverfahrens bei einer Integration neuer Dienste. Die Raumaufteilung entspricht einer baumartigen Struktur, deren Knoten die einzelnen Räume darstellt. Des Weiteren bekommt jeder Raum eine systemweit eindeutige Identifikationsnummer. Die Identifikationsnummern werden aufgrund der Teilungsgeschichte der Räume festgelegt. Die Identifikationsnummern aller Subteilräume, die zuvor einen gemeinsamen Teilraum des Merkmalsraums gebildet haben, stimmen bis auf die letzte Kennziffer überein. Die Raumnummerierung dient neben der systemweit eindeutigen Identifikation der Teilräume bzw. Subteilräume auch der Defragmentierung bzw. Zusammenführung der Subteilräume, die vor einem letzten Teilungsschritt zusammengehört haben, um die Stabilität des Systems zu erhalten.

In FIG 7 ist oben zunächst ein erster Teilraum TR1 mit den Koordinatengrenzen (0,0) - (100,100) dargestellt. Der erste Teilraum TR1 ist gekennzeichnet durch die Identifikationsnummer 1. Auf Anfrage eines neuen Dienstes wird der erste Teilraum TR1 in einen ersten Subteilraum STR1 und in einen zweiten Subteilraum STR2 aufgeteilt. Für den ersten Subteilraum STR1 wird die Identifikationsnummer 10 vorgesehen, während für den zweiten Subteilraum STR2 die Identifikationsnummer 11 gewählt wird. Anhand der neuen Identifikationsnummern lässt sich nun reproduzieren, dass der erste Teilraum TR1, aus dem die Subteilräume STR1,STR2 entstanden sind, die Identifikationsnummer 1 trug. D.h., die Identifikationsnummer des Vaterknotens ist in der ersten Stelle der Identifikationsnummern der Subteilräume STR1, STR2 hinterlegt.

FIG 7 unten zeigt eine weitere Anwendung des Raumaufteilungsverfahrens bzw. der Identifikationsnummernvergabe bei einer weiteren Anfrage eines neuen Dienstes auf Integration in den virtuellen Merkmalsraum. Die Koordinaten des neu hinzukommenden Dienstes bzw. seines Knotens befinden sich innerhalb des ursprünglichen zweiten Subteilraums STR2. Dieser zweite Subteilraum STR2 wird entsprechend aufgeteilt in zwei neue Subteilräume, deren Vaterraum der ursprüngliche Subteilraum STR2 darstellt. Entsprechend werden für die nun neu entstandenen Subteilräume die Identifikationsnummern 110 und 111 gewählt. Anhand dieser nun dreistelligen Identifikationsnummern lässt sich die Teilungsgeschichte komplett reproduzieren.

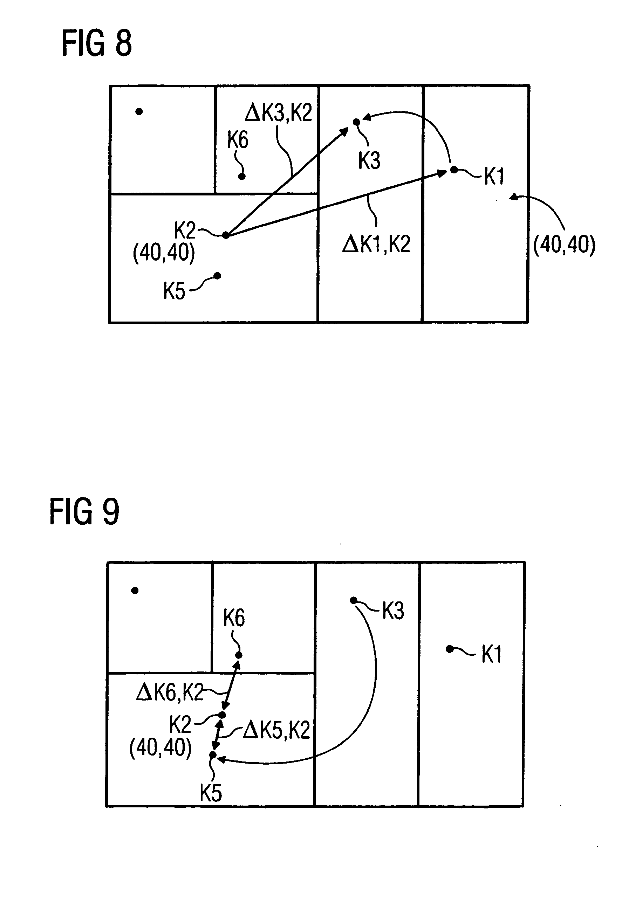

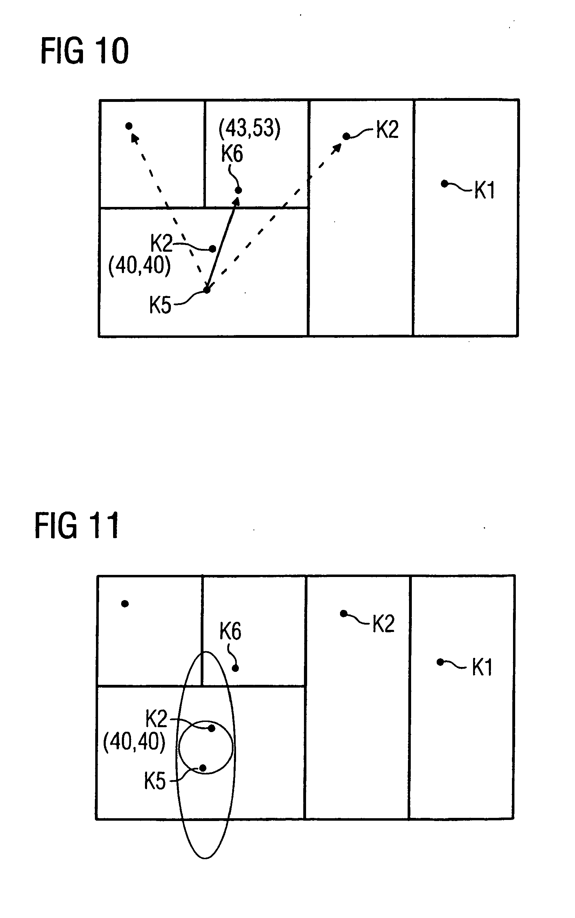

FIG 8 zeigt einen ersten Schritt bei der Bearbeitung einer Dienstsuchanfrage, FIG 9 einen zweiten, FIG 10 einen dritten und FIG 11 einen vierten Schritt. Die Ausführung des Suchverfahrens ermöglicht es, beginnend an einem beliebigen Knoten (Serviceobjekt), einen gewünschten Zielknoten Schritt für Schritt systematisch nach einem bestimmten Schema zu erreichen. Das Suchverfahren wird den Knoten als Zielknoten zurückgeben, der zu der Suchanfrage am nächsten liegt und die angegebene Suchkriterien am besten erfüllt.

Die Suchanfrage wird genau mit einem Wert pro Leistungsmerkmal der Suchgruppe gestellt. Darüber hinaus kann zur Verfeinerung der Suche zu jedem Leistungsmerkmal ein Intervall (Toleranzgrenze) bestimmt werden, worin die Suche erfolgen wird. Durch den Suchalgorithmus ist es möglich, immer einen Dienst zu finden, der die Suchanforderungen am besten erfüllt.

Als Ziel der Bearbeitung der Dienstsuchanfrage lässt sich definieren:

Finde den nächsten Knoten bzw. das Serviceobjekt zu der Suchanfrage.

In dem dargestellten Szenario wird ein Dienst gesucht, der im virtuellen Merkmalsraum durch einen zweiten Knoten K2 mit den Koordinaten (40,40) repräsentiert wird. Die Dienstanforderung wird zunächst an einen ersten Knoten K1 gerichtet. Dieser findet in seiner Nachbarschaftsliste Lageinformationen bezüglich eines dritten Knotens K3, dessen Abstand $\Delta K3, K2$ zum Knoten K2, der die Dienstanforderung repräsentiert, geringer ist als der Abstand $\Delta K1$, K2 zwischen dem ersten Knoten und dem zweiten Knoten. Folglich wird die Netzwerkkomponente, die den ersten Knoten K1 verwaltet, die Dienstanforderung an den dritten Knoten K3 bzw. an eine weitere Netzwerkkomponente, die den dritten Knoten K3 verwaltet, weiterleiten. Auf diese Weise gelangt die Dienstanforderung schließlich an einen fünften K5, der den geringsten Abstand zum zweiten Knoten K2 aufweist (s. FIG 9).

FIG 10 zeigt einen dritten Schritt bei der Bearbeitung der Dienstsuchanfrage. Die Netzwerkkomponente, die den fünften Knoten K5 verwaltet, überprüft, welche der benachbarten Teilräume bzw. Knoten die Dienstanforderung unter Berücksichtigung von Toleranzintervallen erfüllt. Es sein angenommen, dass das Toleranzintervall für die erste Koordinate [30,50] und für die zweite Koordinate [35,100]. Ein sechster Knoten K6 erfüllt diese Kriterien, so dass die Dienstanforderung an diesen weitergeleitet wird.

FIG 11 zeigt einen vierten Schritt bei der Bearbeitung der Dienstsuchanfrage. Um die Koordinaten der Dienstanforderung herum wird eine Fläche gebildet, die entsprechend der Gewichtsfaktoren der Dienstanforderung verzerrt wird. Angenommen seien hier die Gewichtsfaktoren 0,8 für die erste Dimension bzw. erste Koordinate und 0,2 für die zweite Dimension bzw. zweite Koordinate. Innerhalb dieser Fläche werden alle Knoten durchsucht. Die Netzwerkkomponente bzw. der Peer, der den Dienst verwaltet, der das Suchkriterium am nächste erfüllt, ist das Ergebnis der Suche.

Der Suchalgorithmus lässt sich wie folgt beschreiben. Die Begriffe Teilraum, Raum und Raumobjekt werden hierbei so wie im gesamten Dokument als synonym betrachtet. Ebenso werden der Begriff Serviceobjekt gleichbedeutend zu dem Begriff Dienst und der Begriff Dienstsuchanfrage gleichbedeutend zu dem Begriff Dienstanforderung verwendet.

Das Suchverfahren läuft in folgenden Schritten ab;
Phase 1:

1. Die Dienstsuchanfrage wird als erstes an einem beliebigen Raumobjekt im Merkmalsraum gestellt (FIG 8)
2. Ohne Berücksichtigung der Gewichtsfaktoren wird die Suchanfrage an das Raumobjekt weitergeleitet, in dessen Raum die Dienst-Suchanfrage liegt (FIG 9).

Phase 2:

1. Es wird nach einem Nachbarraum gesucht, dessen Serviceobjekt das Suchkriterium (*mit Berücksichtigung der Gewichtsfaktoren, angegebenen Toleranzgrenzen und Prioritätsregeln*) erfüllt (FIG 10).
2. Falls kein Nachbarraum existiert, dessen Serviceobjekt das Suchkriterium erfüllt wird direkt an dem Raum, wo die Suchanfrage liegt Phase 3 angewandt, sonst wird die Dienstsuchanfrage erst an dem gefundenen Nachbarraum weitergeleitet.

Phase 3:

1. Um die Koordinaten der Dienstsuchanfrage herum wird eine Fläche gebildet, die entsprechend des Verhältnisses der Gewichtsfaktoren der Dienstsuchanfrage verzerrt wird (FIG 11).

2. Dienst-Suchanfrage wird an allen Räumen (*mit Berücksichtigung der Prioritätsregeln*), die innerhalb dieser Fläche liegen, weitergeleitet.

3. Alle in dieser Fläche liegende Räume melden sich zurück bei dem Raum, wo die Fläche gebildet wurde. Dabei schickt jedes Raumobjekt seinen Serviceobjektabstand (Distanzwert), Peer-Namen, seine Satisfynumber (gibt die Anzahl der erfüllten Kriterien an) und eine Gewichtungsliste mit (beinhaltet, zu den erfüllten Kriterien gehörende Gewichtsfaktoren).

4. Von allen Räumen zugesendete Informationen werden in die Ergebnisliste aufgenommen und bewertet. Das Ergebnis der bewerteten Liste, ist ein Peer, der den gefundenen Dienst verwaltet und ausführt.

Prioritätsregel:

Priorität 1:  WENN "$k$ Serviceobjekte erfüllen alle $n$ Kriterien"
DANN Berechnung der Distanz zu allen $k$ Serviceobjekten.
Weiterleitung der Suchanfrage an den Raum, mit der minimalen Serviceobjekt-Distanz.

Priorität 2:  WENN *"$k$ Serviceobjekte erfüllen ($n$-1) Kriterien mit den größeren Gewichtsfaktoren."*
DANN Berechnung der Distanz zu allen k Serviceobjekten;
Weiterleitung der Suchanfrage an den Raum, mit der minimalen Serviceobjekt-Distanz;
SONST dekrementirre n und wiederhole Schritt 2 solange $n$=1;

Priorität 3:  WENN *"$k$ Serviceobjekte erfüllen ($n$-1) Kriterien mit den kleineren Gewichtsfaktoren."*
DANN Berechnung der Distanz zu allen $k$ Serviceobjekten;
Weiterleitung der Suchanfrage an den Raum, mit der minimalen Serviceobjekt-Distanz;
SONST dekrementiere $n$ und wiederhole Schritt 3 solange $n = 1$;

Priorität 4:  WENN "keiner der $k$ Serviceobjekte erfüllt eine der $n$ Kriterien "
DANN Berechnung der Distanz zu allen $k$ Serviceobjekten;
Weiterleitung der Suchanfrage an den Raum, mit der minimalen Serviceobjekt-Distanz;
SONST Ende;

Bewertung der Ergebnisliste:

1. Der Peer der alle n Kriterien erfüllt (Satifynumber = n) ist das Ergebnis der Suche.
Unter den Peers mit gleichen Satisfynumber $n$ ist der Peer mit dem kleinsten Distanzwert das Ergebnis der Suche.

2. Bei den Peers die nicht alle n-Kriterien erfüllen (Satisfynumber <n) werden deren Gewichtungsliste miteinander verglichen. Unabhängig von der Anzahl der erfüllten Kriterien wird der jenige Peer ausgewählt, der die Kriterien mit den höchsten Gewichtsfaktoren erfüllt.

Wenn sich in einem Netzwerk, insbesondere in einem Peer-to-Peer Netzwerk, eine Netzwerkkomponente, insbesondere ein Peer X, vom System abmelden will, sendet er an seine Nachbarpeers einen Deregister-Request. Durch diese Nachricht wird der Peer X aus der Nachbarliste seiner Nachbarn entfernt. Da das Raumobjekt, das der Peer X verwaltet, kein Serviceobjekt mehr hat, wird es im Merkmalsraum freigestellt. Jedes Nachbarraumobjekt dieses freigestellten (leeren) Raumobjektes überprüft für sich, ob es sich mit diesem Raumobjekt vereinigen kann. Falls nicht, wird das Raumobjekt mit den kleinsten Raumgrenzen das leere Raumobjekt zur Mitverwaltung übernehmen. Da jedes Raumobjekt eine Liste der Nachbarn seiner direkten Nachbarn mitführt und dadurch deren Raumgrenzen kennt, wissen alle Nachbarn des leeren Raumobjekts von vornherein, welches Nachbarraumobjekt die Verwaltung übernehmen wird.

Wenn Peers abstürzen oder das System verlassen müssen, muss sichergestellt sein, dass die Räume, für die sie zuständig waren, von den verbleibenden Räumen des Merkmalsraums (Suchgruppe) übernommen werden. Jeder Peer schickt mit bestimmten Takten Alive-Nachrichten an seinen Nachbarn, die signalisieren, dass er noch im Netzwerk erreichbar ist. Genauso senden Peers, in deren Räumen sich mehrere Serviceobjekte mit identischen Serviceobjekten befinden, mit kurzen Abständen Alive-Nachrichten. Beim Fehlen solcher Nachrichten geht jeder Nachbarpeer auf der Peer-Ebene und jedes Raumobjekt auf der Raum-Ebene davon aus, dass ihr Nachbarpeer bzw. die Serviceobjekte der Nachbarräume ausgefallen sind.

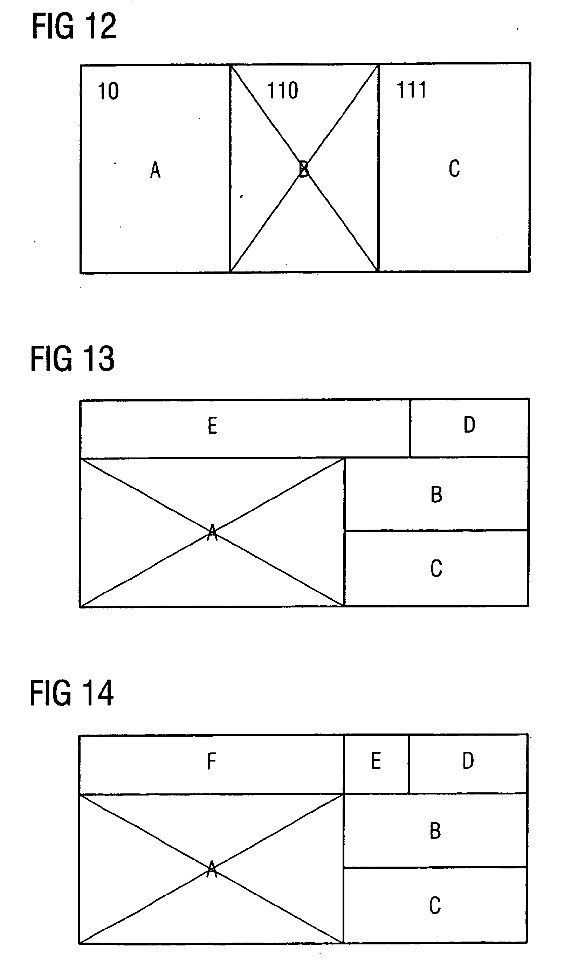

FIG 12 zeigt ein erstes Ausfallszenario in einem virtuellen Merkmalsraum. Der dargestellte Merkmalsraum weist die Teilräume bzw. Raumobjekte A, B und C auf, die jeweils durch die Identifikationsnummern 10,110 und 111 gekennzeichnet sind. Das Raumobjekt B entspricht beispielsweise dem ersten Teilraum TR1 und das Raumobjekt C dem zweiten Teilraum TR2. Falls der Knoten, der dem Raum B (mit Knoten sind die Serviceobjekte auf der Raum-Ebene gemeint), ausfällt, fehlt die Alive-Nachricht vom Raumobjekt B. Sowohl A als auch C wird diese Alive-Nachricht nicht mehr bekommen. Daraufhin wartet jedes Raumobjekt eine bestimmte Zeit, um festzustellen, ob der Raum durch ein anderes Serviceobjekt mit identischen Leistungsmerkmalen belegt wird. Falls ein derartiges Serviceobjekt nicht existiert, überprüft jedes Nachbarraumobjekt, in diesem Falle A und C, ob sich das leere Raumobjekt B mit ihm zu einem Vaterknoten vereinigen lässt. Dies kann jeder Nachbarraum für sich feststellen, indem er erst überprüft, ob er mit dem ausgefallenen Raum eine gemeinsame Kantenlänge besitzt. Falls ja, wird anschließend jeder Nachbarraum seine Raum-ID-Nummer (=Identifikationsnummer) mit der ID-Nummer des aufgefallenen Raums vergleichen. Die Räume, deren ID-Nummer sich nur in der letzten Ziffer unterscheiden, können zu einem größeren Raum zusammengefasst werden. Falls keiner der Nachbarräume anhand der ID-Nummer den ausgefallenen Raum übernehmen kann, obwohl er mit ihm eine gemeinsame Kantenlänge hat, wird der jenige Raum ihn übernehmen der die kleinste ID-Nummer besitzt.

In FIG 12 wird das Raumobjekt C mit dem Raumobjekt B verschmelzen. Der neu entstandene Raum bekommt die Identifikationsnummer 11.

Das Raumobjekt (hier der Raum C), das seinen Raum mit dem Raum des Raumobjekts B vereinigen soll, sendet an alle Nachbarraumobjekte des ausgefallenen (leeren) Raumobjektes eine *will-take-Message* senden und seinen Raum um den Raum des ausgefallenen Raumobjektes B erweitern. Jedes nicht betroffene Nachbarraumobjekt des ausgefallenen Raumobjekts B startet inzwischen einen Timer. Falls diese Nachbarraumobjekte bis nach Ablauf ihres Timers keine *will-take-Message* bekommen, starten sie ihren Timer erneut und warten wiederum auf eine *will-take-Message.* Anschließend wird dasjenige Raumobjekt den leeren Raum B übernehmen, das mit ihm eine gemeinsame Kantelänge besitzt und die kleinste ID-Nummer unter allen Nachbarn des Raumobjekts B hat. Nach dieser Änderung schickt das Raumobjekt, das seinen Raum vergrößert hat, an alle seine direkten Nachbarn eine Update-Nachricht. Die Update-Nachricht enthält Informationen wie:

1. seine aktualisierte Nachbarschaftsliste

2. seine neue ID-Nummer

3. seine neuen Raumgrenzwerte

FIG 13 zeigt ein zweites Ausfallszenario in einem virtuellen Merkmalsraum und FIG 14 ein viertes Ausfallszenario.

Falls ein Peer ausfällt, aber der dazugehörende Raum aufgrund der Teilungsgeschichte nicht mit einer der Nachbarräume zusammengefasst werden kann wie FIG 13, wird jedes Nachbarraumobjekt des leeren Raumobjekts überprüfen, ob es mit dem leeren Raumobjekt eine gemeinsame Kante besitzt. Wenn ja, wird der leere Raum mit einem der nach dem zuvor beschriebenen Verfahren bestimmten Nachbarräume vereint. Wenn nein, wird der kleinste Nachbarraum den leeren Raum übernehmen. Weil jedes Raumobjekt die Nachbarn seiner direkten Nachbarn und die dazugehörigen Informationen wie ID-Nummer, Raumgröße und Peer-Name kennt, wissen alle Nachbarräume des ausgefallenen Raums, welcher Nachbar den leeren Raum zur Verwaltung übernimmt. Das Raumobjekt, das die Verwaltung übernommen hat, wird danach an allen Nachbarn eine Update-Nachricht schicken, die die Informationen über diese Änderungen beinhaltet.

Ein Raumobjekt ist im Prinzip nur dann zufrieden, wenn es von einem Serviceobjekt gefüllt ist. Ein Raumobjekt kann von einem anderen Raumobjekt zur Mitverwaltung übernommen werden, sofern es kein Serviceobjekt besitzt oder der Raum selbst ausgefallen ist. Während dieser Zeit wird in bestimmten Zeitabständen überprüft, ob der übernommene Raum mit einem seiner Nachbarraumobjekte eine gemeinsame Kante besitzt, damit es sich mit diesem zu einem größeren Raum zusammenfassen kann wie in FIG 14. Falls sich herausstellt, dass es sich mit einem der Nachbarraumobjekte auf diese Weise defragmentieren kann, wird an dieses Raumobjekt eine *take-it-Request* gesendet. Kommt daraufhin eine positive Antwort von dem angefragten Nachbarraumobjekt, eine *take-it-Response,* dann werden die Räume zusammengefasst und die Änderung wird dann den übrigen Nachbarräumen mitgeteilt.

**Patentansprüche**

1. Netzwerkkomponente mit

   - Mitteln zur Bereitstellung mindestens eines Dienstes (D) innerhalb eines Peer-to-Peer Netzwerks und
   - Mitteln zur Weiterleitung einer Dienstanforderung innerhalb des Netzwerks,

   **dadurch gekennzeichnet, dass**

   - Mittel zur Abbildung des Dienstes (D) abhängig von skalierbaren Leistungsmerkmalen des Dienstes auf erste Raumkoordinaten eines ersten Knotens (K1) in einem virtuellen Merkmalsraum;
   - Mittel zur Erfassung von zweiten Raumkoordinaten eines zweiten Knotens (K2), wobei die zweiten Raumkoordinaten Leistungsmerkmale der innerhalb des Netzwerks gestellten Dienstanforderung kennzeichnen, und
   - Speichermittel zum Speichern einer Nachbarschaftsliste mit Lageinformationen über mindestens einen dritten Knoten (K3) mit dritten Raumkoordinaten, wobei der dritte Knoten (K3) einen weiteren Dienst kennzeichnet, der von einer ersten weiteren Netzwerkkomponente des Netzwerks bereitgestellt wird, vorgesehen sind und
   - die Mittel zur Weiterleitung der Dienstanforderung innerhalb des Netzwerks zur Weiterleitung der Dienstanforderung in Abhängigkeit der ersten und zweiten Raumkoordinaten und der Lageinformationen ausgebildet sind.

2. Netzwerkkomponente nach Anspruch 1
   wobei der Merkmalsraum mindestens n Dimensionen aufweist, wobei n der Summe der skalierbaren Leistungsmerkmale der innerhalb des Netzwerks verfügbaren Dienste (D) entspricht.

3. Netzwerkkomponente nach Anspruch 1 oder 2,
   wobei die Netzwerkkomponente Mittel zur Bestimmung eines den ersten Knoten (K1) einschließenden ersten Teilraums (TR1) innerhalb des Merkmalsraumes aufweist.

4. Netzwerkkomponente nach Anspruch 3,
   wobei die Lageinformationen einen den dritten Knoten (K3) einschließenden zweiten Teilraum (TR2) kennzeichnen.

5. Netzwerkkomponente nach Anspruch 2 und 4,
   wobei die Koordinatenintervalle des ersten Teilraumes (TR1) und des zweiten Teilraums (TR2) in n-1 Dimensionen überlappen und in einer Dimension aneinandergrenzen.

6. Netzwerkkomponente nach Anspruch 5,
   wobei die Speichermittel zum Speichern von weiteren Lageinformationen eines dritten Teilraumes vorgesehen sind, wobei die Koordinatenintervalle des dritten Teilraumes und des zweiten Teilraums (TR2) in n-1 Dimensionen überlappen und in einer Dimension aneinandergrenzen.

7. Netzwerkkomponente nach einem der Ansprüche 4 bis 6, wobei die Netzwerkkomponente Mittel zur Bestimmung des Teilraums umfasst, der den geringsten Abstand zum zweiten Knoten (K2) aufweist.

8. Netzwerkkomponente nach einem der vorhergehenden Ansprüche,
   wobei die Netzwerkkomponente Mittel zur Erfassung von Gewichtsfaktoren und/oder Toleranzintervallen aufweist, wobei jeweils ein Gewichtungsfaktor und/oder jeweils ein Toleranzintervall einer der zweiten Raumkoordinaten des zweiten Knotens (K2) zugeordnet sind.

9. Netzwerkkomponente nach Anspruch 8,
   wobei die Mittel zur Weiterleitung der Dienstanforderung derart ausgeführt sind, dass die Weiterleitung unter Berücksichtigung der Gewichtsfaktoren und/oder Toleranzintervalle geschieht.

10. Netzwerkkomponente nach einem der vorhergehenden Ansprüche,
    wobei die Netzwerkkomponente Mittel zur Erfassung von vierten Raumkoordinaten eines vierten Knotens (K4) aufweist, wobei die vierten Raumkoordinaten skalierbare Leistungsmerkmale einer zweiten weiteren Netzwerkkomponente kennzeichnen.

11. Netzwerkkomponente nach Anspruch 3 und 10,

wobei die Netzwerkkomponente Mittel aufweist zur dynamischen Aufteilung des ersten Teilraumes (TR1) in einen ersten (STR1) und einen zweiten Subteilraum (STR2) derart, dass der erste Subteilraum (STR1) den ersten Knoten (K1) und der zweite Subteilraum (STR2) den vierten Knoten (K4) umschließt.

12. Netzwerkkomponente nach Anspruch 11,
wobei die Netzwerkkomponente Mittel zur Generierung jeweils einer Identifikationsnummer für den ersten und zweiten Subteilraum (STR1,STR2) aufweist, wobei die jeweilige Identifikationsnummer sowohl den zugehörigen Subteilraum (STR1,STR2) als auch den ersten Teilraum (TR1) kennzeichnet.

13. Netzwerkkomponente nach Anspruch 4,
wobei die Netzwerkkomponente Mittel zur Verschmelzung des ersten und zweiten Teilraums (TR1,TR2) bei Ausfall der ersten weiteren Netzwerkkomponente aufweist.

14. Netzwerkkomponente nach einem der vorhergehenden Ansprüche,
wobei die Netzwerkkomponente in ein Prozessleitsystem integrierbar ist.

15. Prozessleitsystem mit mindestens einer Netzwerkkomponente nach einem der vorhergehenden Ansprüche.

16. Verfahren zur Bereitstellung von Diensten (D) in einem Peer-to-Peer Netzwerk, bei dem

- mindestens ein Dienst (D) innerhalb des Netzwerks von einer Netzwerkkomponente bereitgestellt wird und
- eine Dienstanforderung innerhalb des Netzwerks weitergeleitet wird,

**dadurch gekennzeichnet, dass**

- der Dienst (D) abhängig von skalierbaren Leistungsmerkmalen des Dienstes (D) auf erste Raumkoordinaten eines ersten Knotens (K1) in einem virtuellen Merkmalsraum abgebildet wird,
- zweite Raumkoordinaten eines zweiten Knotens (K2) erfasst werden, wobei die zweiten Raumkoordinaten Leistungsmerkmale der innerhalb des Netzwerks gestellten Dienstanforderung kennzeichnen,
- eine Nachbarschaftsliste mit Lageinformationen über mindestens einen dritten Knoten (K3) mit dritten Raumkoordinaten innerhalb der Netzwerkkomponente gespeichert wird, wobei der dritte Knoten (K3) einen weiteren Dienst kennzeichnet, der von einer ersten weiteren Netzwerkkomponente des Netzwerks bereitgestellt wird, und
- die Dienstanforderung innerhalb des Netzwerks in Abhängigkeit der ersten und zweiten Raumkoordinaten und der Lageinformationen weitergeleitet wird.

17. Verfahren nach Anspruch 16
wobei der Merkmalsraum mindestens n Dimensionen aufweist, wobei n der Summe der skalierbaren Leistungsmerkmale der innerhalb des Netzwerks verfügbaren Dienste (D) entspricht.

18. Verfahren nach Anspruch 16 oder 17,
wobei ein den ersten Knoten (K1) einschließender erster Teilraum (TR1) innerhalb des Merkmalsraumes bestimmt wird.

19. Verfahren nach Anspruch 18,
wobei die Lageinformationen einen den dritten Knoten (K3) einschließenden zweiten Teilraum (STR2) kennzeichnen.

20. Verfahren nach Anspruch 17 und 19,
wobei die Koordinatenintervalle des ersten Teilraumes (STR1) und des zweiten Teilraums (STR2) in n-1 Dimensionen überlappen und in einer Dimension aneinandergrenzen.

21. Verfahren nach Anspruch 20,
wobei weitere Lageinformationen eines dritten Teilraumes innerhalb der Netzwerkkomponente gespeichert werden, wobei die Koordinatenintervalle des dritten Teilraumes und des zweiten Teilraums (STR2) in n-1 Dimensionen überlappen und in einer Dimension aneinandergrenzen.

22. Verfahren nach einem der Ansprüche 19 bis 21,
wobei der Teilraum bestimmt wird, der den geringsten Abstand zum zweiten Knoten (K2) aufweist.

**23.** Verfahren nach einem der vorhergehenden Ansprüche, wobei Gewichtsfaktoren und/oder Toleranzintervallen erfasst werden, wobei jeweils ein Gewichtungsfaktor und/oder jeweils ein Toleranzintervall einer der zweiten Raumkoordinaten des zweiten Knotens (K2) zugeordnet werden.

**24.** Verfahren nach Anspruch 23,
wobei die Weiterleitung der Dienstanforderung unter Berücksichtigung der Gewichtsfaktoren und/oder Toleranzintervalle geschieht.

**25.** Verfahren nach einem der vorhergehenden Ansprüche, wobei vierte Raumkoordinaten eines vierten Knotens (K4) erfasst werden, wobei die vierten Raumkoordinaten skalierbare Leistungsmerkmale einer zweiten weiteren Netzwerkkomponente kennzeichnen.

**26.** Verfahren nach Anspruch 18 und 25,
wobei der erste Teilraum (TR1) dynamisch in einen ersten und einen zweiten Subteilraum (STR1,STR2) geteilt wird derart, dass der erste Subteilraum (STR1) den ersten Knoten (K1) und der zweite Subteilraum (STR2) den vierten Knoten (K4) umschließt.

**27.** Verfahren nach Anspruch 26,
wobei jeweils eine Identifikationsnummer für den ersten und zweiten Subteilraum (STR1,STR2) generiert wird, wobei die jeweilige Identifikationsnummer sowohl den zugehörigen Subteilraum (STR1,STR2) als auch den ersten Teilraum (TR1) kennzeichnet.

**28.** Verfahren nach Anspruch 19,
wobei der erste und zweite Teilraum (TR1,TR2) bei Ausfall der ersten weiteren Netzwerkkomponente miteinander verschmolzen werden.

**29.** Verfahren nach einem der vorhergehenden Ansprüche,
wobei die Netzwerkkomponente in ein Prozessleitsystem integriert ist.

**Claims**

**1.** Network component having

- means for providing at least one service (D) within a peer-to-peer network and
- means for forwarding a service request within the network, **characterised in that**
- means for mapping the service (D) as a function of scalable performance features of the service to first spatial coordinates of a first node (K1) in a virtual feature space,
- means for capturing second spatial coordinates of a second node (K2), wherein the second spatial coordinates designate performance features of the service request made within the network, and
- storage means for storing a neighbourhood list with position data about at least one third node (K3) with third spatial coordinates, wherein the third node (K3) designates a further service which is provided by a first further network component of the network, are provided and
- the means for forwarding the service request within the network are designed for forwarding the service request as a function of the first and second spatial coordinates and of the position data.

**2.** Network component according to claim 1,
wherein the feature space has at least n dimensions, wherein n corresponds to the total of the scalable performance features of the services (D) available within the network.

**3.** Network component according to claim 1 or 2,
wherein the network component has means for determining a first partial area (TR1) within the feature space which encloses the first node (K1).

**4.** Network component according to claim 3,
wherein the position data designates a second partial area (TR2) which encloses the third node (K3).

**5.** Network component according to claims 2 and 4,

wherein the coordinate intervals of the first partial area (TR1) and of the second partial area (TR2) overlap in n-1 dimensions and adjoin one another in one dimension.

6. Network component according to claim 5,
wherein the storage means for storing further position data of a third partial area are provided, wherein the coordinate intervals of the third partial area and of the second partial area (TR2) overlap in n-1 dimensions and adjoin one another in one dimension.

7. Network component according to one of claims 4 to 6, wherein the network component comprises means for determining the partial area which is the least distant from the second node (K2).

8. Network component according to one of the preceding claims, wherein the network component has means for capturing weighting factors and/or tolerance intervals, wherein in each case a weighting factor and/or in each case a tolerance interval are assigned to one of the second spatial coordinates of the second node (K2).

9. Network component according to claim 8,
wherein the means for forwarding the service request are designed such that the forwarding takes into consideration the weighting factors and/or tolerance intervals.

10. Network component according to one of the preceding claims,
wherein the network component has means for capturing fourth spatial coordinates of a fourth node (K4), wherein the fourth spatial coordinates designate scalable performance features of a second further network component.

11. Network component according to claims 3 and 10,
wherein the network component has means for dynamic splitting of the first partial area (TR1) into a first (STR1) and a second partial subarea (STR2) such that the first partial subarea (STR1) includes the first node (K1) and the second partial subarea (STR2) includes the fourth node (K4).

12. Network component according to claim 11,
wherein the network component has means for generating in each case an identification number for the first and second partial subarea (STR1, STR2), wherein the respective identification number designates both the associated partial subarea (STR1, STR2) and also the first partial area (TR1).

13. Network component according to claim 4,
wherein the network component has means for merging the first and second partial area (TR1, TR2) if the first further network component fails.

14. Network component according to one of the preceding claims,
wherein the network component can be integrated into a process control system.

15. Process control system having at least one network component according to one of the preceding claims.

16. Method for providing services (D) in a peer-to-peer network, in which

- at least one service (D) is provided within the network by a network component and
- a service request is forwarded within the network, **characterised in that**
- the service (D) is mapped as a function of scalable performance features of the service (D) to first spatial coordinates of a first node (K1) in a virtual feature space,
- second spatial coordinates of a second node (K2) are captured, wherein the second spatial coordinates designate performance features of the service request made within the network,
- a neighbourhood list with position data about at least one third node (K3) with third spatial coordinates is stored within the network component, wherein the third node (K3) designates a further service which is provided by a first further network component of the network, and
- the service request is forwarded within the network as a function of the first and second spatial coordinates and of the position data.

17. Method according to claim 16,
wherein the feature space has at least n dimensions, wherein n corresponds to the total of the scalable performance features of the services (D) available within the network.

18. Method according to claim 16 or 17,
wherein a first partial area (TR1) which encloses the first node (K1) is determined within the feature space.

19. Method according to claim 18,
wherein the position data designates a second partial area (TR2) which encloses the third node (K3).

20. Method according to claims 17 and 19,
wherein the coordinate intervals of the first partial area (TR1) and of the second partial area (TR2) overlap in n-1 dimensions and adjoin one another in one dimension.

21. Method according to claim 20,
wherein further position data of a third partial area is stored within the network component, wherein the coordinate intervals of the third partial area and of the second partial area (TR2) overlap in n-1 dimensions and adjoin one another in one dimension.

22. Method according to one of claims 19 to 21,
wherein the partial area is determined which is the least distant from the second node (K2).

23. Method according to one of the preceding claims,
wherein weighting factors and/or tolerance intervals are captured, wherein in each case a weighting factor and/or in each case a tolerance interval are assigned to one of the second spatial coordinates of the second node (K2).

24. Method according to claim 23,
wherein the forwarding of the service request takes into consideration the weighting factors and/or tolerance intervals.

25. Method according to one of the preceding claims,
wherein fourth spatial coordinates of a fourth node (K4) are captured, wherein the fourth spatial coordinates designate scalable performance features of a second further network component.

26. Method according to claims 18 and 25,
wherein the first partial area (TR1) is split dynamically into a first and a second partial subarea (STR1, STR2) such that the first partial subarea (STR1) includes the first node (K1) and the second partial subarea (STR2) includes the fourth node (K4) .

27. Method according to claim 26,
wherein in each case an identification number is generated for the first and second partial subarea (STR1, STR2), wherein the respective identification number designates both the associated partial subarea (STR1, STR2) and also the first partial area (TR1).

28. Method according to claim 19,
wherein the first and second partial area (TR1, TR2) are merged with one another if the first further network component fails.

29. Method according to one of the preceding claims,
wherein the network component is integrated into a process control system.

**Revendications**

1. Composant de réseau ayant

    - des moyens pour la mise à disposition d'au moins un service (D) à l'intérieur d'un réseau Peer-to-Peer et
    - des moyens pour acheminer une demande de service à l'intérieur du réseau,

    **caractérisé en ce que**,

- des moyens sont prévus pour représenter le service (D) dépendant des caractéristiques de performance évolutives du service sur de premières coordonnées spatiales d'un premier noeud (K1) dans un espace virtuel de caractéristiques,

- des moyens pour saisir des deuxièmes coordonnées spatiales d'un deuxième noeud (K2), les deuxièmes coordonnées spatiales caractérisant des caractéristiques de performance de la demande de service posée à l'intérieur du réseau, et

- des moyens de mémorisation pour mémoriser une liste de voisinage avec des informations de position sur au moins un troisième noeud (K3) ayant des troisièmes coordonnées spatiales, le troisième noeud (K3) caractérisant un service supplémentaire qui est mis à disposition par un premier composant de réseau supplémentaire du réseau, et

- les moyens pour acheminer la demande de service à l'intérieur du réseau étant conçus pour acheminer la demande de service en fonction des premières et deuxièmes coordonnées spatiales et des informations de position.

2. Composant de réseau selon la revendication 1,
   dans lequel l'espace des caractéristiques présente au moins n dimensions, n correspondant à la somme des caractéristiques de performance évolutives des services (D) disponibles à l'intérieur de réseau.

3. Composant de réseau selon la revendication 1 ou 2, dans lequel le composant de réseau présente des moyens pour déterminer un premier espace partiel (TR1) incluant le premier noeud (K1) à l'intérieur de l'espace de caractéristiques.

4. Composant de réseau selon la revendication 3,
   dans lequel les informations de position caractérisent un deuxième espace partiel (TR2) incluant le troisième noeud (K3).

5. Composant de réseau selon la revendication 2 et 4, dans lequel les intervalles de coordonnées du premier espace partiel (TR1) et du deuxième espace partiel (TR2) se chevauchent dans n-1 dimensions et se jouxtent dans une dimension.

6. Composant de réseau selon la revendication 5,
   dans lequel les moyens de mémorisation sont prévus pour mémoriser d'autres informations de position d'un troisième espace partiel, les intervalles de coordonnées du troisième espace partiel et du deuxième espace partiel (TR2) se chevauchent dans n-1 dimensions et se jouxtent dans une dimension.

7. Composant de réseau selon l'une quelconque des revendications 4 à 6, dans lequel les composants de réseau comprennent des moyens pour déterminer l'espace partiel, qui présente la plus petite distance au deuxième noeud (K2).

8. Composant de réseau selon l'une quelconque des revendications précédentes,
   dans lequel le composant de réseau présente des moyens pour saisir des facteurs de pondération et/ou des intervalles de tolérance, à chaque fois un facteur de pondération et/ou à chaque fois un intervalle de tolérance étant associés à l'une des deuxièmes coordonnées spatiales du deuxième noeud (K2).

9. Composant de réseau selon la revendication 8,
   dans lequel les moyens pour acheminer la demande de service sont réalisés de telle façon que l'acheminement se produit en tenant compte des facteurs de pondération et/ou des intervalles de tolérance.

10. Composant de réseau selon l'une quelconque des revendications précédentes,
    dans lequel le composant de réseau présente des moyens pour saisir des quatrièmes coordonnées spatiales d'un quatrième noeud (K4), les quatrièmes coordonnées spatiales caractérisant des caractéristiques de performance évolutives d'un deuxième composant de réseau supplémentaire.

11. Composant de réseau selon la revendication 3 et 10, dans lequel le composant de réseau présente des moyens pour le partage dynamique du premier espace partiel (TR1) en un premier (STR1) et un deuxième sous-espace partiel (STR2) de sorte que le premier sous-espace partiel (STR1) renferme le premier noeud (K1) et le deuxième sous-espace partiel (STR2) renferme le quatrième noeud (K4).

**12.** Composant de réseau selon la revendication 11,
dans lequel le composant de réseau présente des moyens pour engendrer à chaque fois un numéro d'identification pour le premier et deuxième sous-espace partiel (STR1, STR2), le numéro d'identification respectif caractérisant aussi bien le sous-espace partiel associé (STR1, STR2) que le premier espace partiel (TR1).

**13.** Composant de réseau selon la revendication 4 dans lequel le composant de réseau présente des moyens pour fusionner le premier et le deuxième espace partiel (TRI, TR2) lors d'une panne du premier composant de réseau supplémentaire.

**14.** Composant de réseau selon l'une quelconque des revendications précédentes,
dans lequel le composant de réseau peut être intégré dans un système de conduite de processus.

**15.** Système de conduite de processus ayant au moins un composant de réseau selon l'une quelconque des revendications précédentes.

**16.** Procédé pour la mise à disposition des services (D) dans un réseau Peer-to-Peer, dans lequel

- au moins un service (D) à l'intérieur du réseau est mis à disposition par un composant de réseau et
- une demande de service est acheminée à l'intérieur du réseau,

**caractérisé en ce que**

- le service (D) en fonction des caractéristiques de performance évolutives du service (D) est représenté sur de premières coordonnées spatiales d'un premier noeud (K1) dans un espace virtuel de caractéristiques,
- des deuxièmes coordonnées spatiales d'un deuxième noeud (K2) sont saisies, les deuxièmes coordonnées spatiales caractérisant des caractéristiques de performance de la demande de service posée à l'intérieur du réseau,
- une liste de voisinage avec des informations de position sur au moins un troisième noeud (K3) avec des troisièmes coordonnées spatiales est mémorisé à l'intérieur du composant de réseau, le troisième noeud (K3) caractérisant un service supplémentaire qui est mis à disposition par un premier composant de réseau supplémentaire du réseau, et
- la demande de service est acheminée à l'intérieur du réseau en fonction des premières et deuxièmes coordonnées spatiales et des informations de position.

**17.** Procédé selon la revendication 16,
dans lequel l'espace des caractéristiques présente au moins n dimensions, n correspondant à la somme des caractéristiques de performance évolutives des services (D) disponibles à l'intérieur du réseau.

**18.** Procédé selon la revendication 16 ou 17,
dans lequel un premier espace partiel (TR1) incluant le premier noeud (K1) est déterminé à l'intérieur de l'espace des caractéristiques.

**19.** Procédé selon la revendication 18,
dans lequel les informations de position caractérisent un deuxième espace partiel (STR2) incluant le troisième noeud (K3).

**20.** Procédé selon la revendication 17 et 19,
dans lequel les intervalles de coordonnées du premier espace partiel (STR1) et du deuxième espace partiel (STR2) se chevauchent dans n-1 dimensions et se jouxtent dans une dimension.

**21.** Procédé selon la revendication 20,
dans lequel des informations de position supplémentaires d'un troisième espace partiel sont mémorisées à l'intérieur du composant de réseau, les intervalles de coordonnées du troisième espace partiel et du deuxième espace partiel (STR2) se chevauchent dans n-1 dimensions et se jouxtent dans une dimension.

**22.** Procédé selon l'une quelconque des revendications 19 à 21,
dans lequel l'espace partiel qui présente la distance la plus faible au deuxième noeud (K2) est déterminé.

23. Procédé selon l'une quelconque des revendications précédentes,
dans lequel des facteurs de pondération et/ou des intervalles de tolérance sont saisis, à chaque fois un facteur de pondération et/ou à chaque fois un intervalle de tolérance étant associés à l'une des deuxièmes coordonnées spatiales du deuxième noeud (K2).

24. Procédé selon la revendication 23,
dans lequel l'acheminement de la demande de service se produit en tenant compte des facteurs de pondération et/ou des intervalles de tolérance.

25. Procédé selon l'une quelconque des revendications précédentes,
dans lequel des quatrièmes coordonnées spatiales d'un quatrième noeud (K4) sont saisies, les quatrièmes coordonnées spatiales caractérisant des caractéristiques de performance évolutives d'un deuxième composant de réseau supplémentaire.

26. Procédé selon la revendication 18 et 25,
dans lequel le premier espace partiel (TR1) est partagé de façon dynamique en un premier et en un deuxième sous-espace partiel (STR1, STR2) de telle sorte que le premier sous-espace partiel (STR1) du premier noeud (K1) et le deuxième sous-espace partiel (STR2) renferment le quatrième noeud (K4).

27. Procédé selon la revendication 26,
dans lequel à chaque fois un numéro d'identification est engendré pour le premier et le deuxième sous-espace partiel (STR1, STR2), le numéro d'identification respectif caractérisant aussi bien le sous-espace partiel associé (STR1, STR2) que le premier espace partiel (TR1).

28. Procédé selon la revendication 19,
dans lequel le premier et le deuxième espace partiel (TRI, TR2) sont fusionnés lors d'une panne du premier composant de réseau supplémentaire.

29. Procédé selon l'une quelconque des revendications précédentes,
dans lequel le composant de réseau est intégré dans un système de conduite de processus.

FIG 1

FIG 2

FIG 3

FIG 4

## FIG 5

TR 1

(0,100)                                    (100,100)

K1
(50,80)

K4
(70,90)

(0,0)                                      (100,0)

## FIG 6

STR 1                    STR 2

(0,100)                                    (100,100)

K4
(70,90)

K1
(50,80)

(0,0)                                      (100,0)

(60,0)

## FIG 7

FIG 8

FIG 9

## FIG 10

## FIG 11

## FIG 12

| 10 | 110 | 111 |
|---|---|---|
| A | B | C |

## FIG 13

| E | | D |
|---|---|---|
| A | B | |
| | C | |

## FIG 14

| F | E | D |
|---|---|---|
| A | B | |
| | C | |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10159931 A1

- US 20010039581 A1

**In der Beschreibung aufgeführte Nicht-Patentliteratur**

- **S. Ratnasamy et al.** A Scalable Content-Addressable Network. *Computer Communication Review,* Oktober 2001, vol. 1 (4), 161-172